# EUROPÄISCHE PATENTSCHRIFT

(11) **EP 1 642 488 B1**
(45) Veröffentlichungstag und Bekanntmachung des Hinweises auf die Patenterteilung: **27.02.2008**
(21) Anmeldenummer: 05020861.0
(22) Anmeldetag: 24.09.2005
(51) Int. Cl.: A01D 34/74

(54) **Fahrbares Arbeitsgerät**
Mobile working apparatus
Appareil de travail mobile

(30) Priorität: 01.10.2004 DE 102004047790
(43) Veröffentlichungstag der Anmeldung: 05.04.2006
(73) Patentinhaber: Viking GmbH, 6336 Langkampfen (AT)
(72) Erfinder: Schneider, Heiko, 6200 Jenbach (AT)
(74) Vertreter: Riedel, Peter

(56) Entgegenhaltungen:
- FR-A- 2 313 860
- GB-A- 1 199 310
- GB-A- 1 479 304
- US-A- 2 287 126
- US-A- 4 699 558

## Beschreibung

Die Erfindung betrifft ein fahrbares Arbeitsgerät, insbesondere einen Rasenmäher mit den Merkmalen nach dem Oberbegriff des Anspruchs 1.

Rasenmäher, Vertikutierer oder vergleichbare fahrbare Arbeitsgeräte weisen einen Rahmen sowie mehrere am Rahmen befestigte Räder auf, mit denen das Arbeitsgerät auf der zu bearbeitenden Fläche abrollt. Die Räder sind freilaufend zum Schieben des Arbeitsgerätes von Hand. Eines oder mehrere Räder können auch motorisch angetrieben sein. Bei bekannten Ausführungen von Rasenmähern erfolgt eine Einstellung der Schnitthöhe durch eine Höhenverstellung von zumindest einem Rad relativ zum tragenden Rahmen. Die entsprechende Anzahl von höhenverstellbaren Rädern ist dazu an verschwenkbaren Trägerarmen aufgehängt, wobei sich in Abhängigkeit von der gewählten Schwenkstellung die gewünschte Relativhöhe des Rahmens mit dem Mähwerk relativ zu den Rädern und damit zu der zu bearbeitenden Fläche ergibt.

Die Höhenverstellung der Räder muß einerseits leicht betätigbar sein und andererseits den auftretenden Betriebslasten zuverlässig standhalten. Vorbekannte Einrichtungen zur Höhenverstellung sind konstruktiv aufwendig und erfordern einen entsprechenden Bauraum.

Aus der US 2,287,126 ist ein fahrbares Arbeitsgerät mit einem höhenverstellbaren Rad bekannt, welches schwenkfest mit einem vertikalen Bolzen verbunden ist. Eine auf den Achsbolzen wirkende Verriegelungseinrichtung in Form einer Schraube ist zur Verriegelung des Achsbolzens in einer gewählten Höhenposition vorgesehen, indem die Schraube wahlweise in eine der Vertiefungen des Achsbolzens eingreift. Um eine Höhenverstellung herbeizuführen, wird die Schraube gelöst. Im Betrieb, also bei verriegelter Höhenverstellung, ist die Schraube festgezogen und greift in eine der Vertiefungen ein. Hierdurch ist nicht nur die Höhenposition des Achsbolzens zusammen mit dem Rad festgelegt, sondern auch eine Schwenkbewegung unterbunden. Eine im Betrieb lenkbare Ausgestaltung ist nicht vorgesehen. Zum Lenken wird das Rad entlastet, so dass es bei Kurvenfahrt seitlich rutschen kann. Die Handhabung bei Kurvenfahrt ist umständlich.

Der Erfindung liegt die Aufgabe zugrunde, ein fahrbares Arbeitsgerät mit einer vereinfachten und leicht zu betätigenden Höhenverstellung anzugeben.

Die Erfindung wird durch ein fahrbares Arbeitsgerät mit den Merkmalen des Anspruchs 1 gelöst.

Es wird ein fahrbares Arbeitsgerät, insbesondere Rasenmäher vorgeschlagen, bei dem das mindestens eine höhenverstellbare Rad mittels eines zumindest im wesentlichen vertikal ausgerichteten und in seiner Achsrichtung höhenverstellbaren Achsbolzens am Rahmen befestigt ist, wobei das höhenverstellbare Rad schwenkfest mit dem Achsbolzen verbunden ist, und eine auf den Achsbolzen wirkende Verrieglungseinrichtung zur Verriegelung des Achsbolzens in einer gewählten Höhenposition vorgesehen ist. Das höhenverstellbare Rad ist gemeinsam mit dem Achsbolzen im Betrieb bei verriegelter Höhenverstellung schwenkbar und lenkbar in einem Schwenklager des Rahmens gehalten. Es ist eine Feststelleinrichtung für eine Unterbindung der Schwenkbewegung des Achsbolzens zusammen mit dem Rad bei verriegelter Höhenverstellung vorgesehen.

Die Höhenverstellung des Arbeitsgerätes erfolgt in einfach zu handhabender Weise, indem der Achsbolzen entriegelt, in seiner Achsrichtung in die gewünschte Höhenposition verschoben und anschließend wieder verriegelt wird. Die Höhenverstellung kann dabei mit geringem Kraftaufwand von Hand oder mit dem Fuß vorgenommen werden. Der im wesentlichen vertikal aufrecht stehende Achsbolzen erfordert ein nur geringes Bauvolumen und ist insbesondere in ein schmales Kopfstück einer dreirädrigen Konstruktion leicht integrierbar. Es ergibt sich eine geschlossene, hochbelastbare Konstruktion, die abgekapselt unempfindlich gegen Verschmutzung ist. Die Gewichtskräfte des Arbeitsgerätes wirken im wesentlichen in der Achsrichtung des Achsbolzens, der in dieser Richtung hochbelastbar ist und entsprechend klein ausgeführt sein kann.

Der Achsbolzen füllt dabei eine Doppelfunktion als Höhenverstelleinrichtung und als Schwenklagerung für das entsprechende Rad aus. Das Rad kann als sogenanntes Pirouettenrad ausgeführt sein, welches im Betrieb frei um 360° schwenkbar ist und eine gute Manövrierfähigkeit des Arbeitsgerätes unter beengten räumlichen Bedingungen erlaubt. Die integrierte Schwenklagerung und Höhenverstellung ist konstruktiv einfach und bei geringem Bauraum hoch belastbar.

In vorteilhafter Weiterbildung umfaßt die Verriegelungseinrichtung ein betätigbares Riegelelement zum formschlüssigen Eingriff in Riegelvertiefungen des Achsbolzens. Die Riegelvertiefungen geben gestufte Höhenpositionen vor, die das Auffinden gewünschter Einstellpositionen erleichtern. Gleichzeitig vermeidet die formschlüssige Verriegelung eine unbeabsichtigte Veränderung der eingestellten Höhenposition während des Betriebes.

Das Riegelelement ist zweckmäßig als quer zur Achsrichtung des Achsbolzens verschwenkbare Riegelplatte ausgebildet. Die Verschwenkung erlaubt eine sichere Betätigung mit geringen Handkräften. Die Riegelplatte umgreift dabei vorteilhaft den Achsbolzen mittels einer Riegelöffnung, wobei zumindest ein Kantenabschnitt und insbesondere zwei in einer Schwenkrichtung sich gegenüberliegende Kantenabschnitte der Riegelöffnung zum Eingriff in die Riegelvertiefung des Achsbolzens vorgesehen sind. In einer mittigen Schwenkposition der Riegelplatte ist der Achsbolzen entriegelt und in seiner Achsrichtung zur Einstellung der gewünschten Höhe frei verschieblich. Durch Schwenken der Riegelplatte wird ein Kantenabschnitt ihrer Riegelöffnung zum Eingriff in die gewählte Riegelvertiefung des Achsbolzens gebracht und hält den Achsbolzen zuverlässig in der gewünschten Höhenposition. Die erforderliche Schwenkposition der Riegelplatte zur Freigabe oder zur Verriegelung des Achsbolzens ist für den Benutzer leicht zu ertasten und vermeidet Fehlbedienungen.

In zweckmäßiger Weiterbildung weist die Riegelplatte bezogen auf die Riegelöffnung gegenüberliegend zu ihrer Schwenkachse eine Bogennut auf, die von einem rahmenfesten Führungsbolzen durchgriffen ist. Insbesondere ist die Riegelplatte dabei mittels des Führungsbolzens in dessen Längsrichtung formschlüssig gehalten. Der in der Bogennut freilaufende Führungsbolzen wirkt im Bereich der beiden Nutenden als Endanschlag, was das Auffinden der gewünschten Rastposition vereinfacht. Gleichzeitig ist die Riegelplatte mittels eines Schraubkopfes und/oder einer Unterlegscheibe des Führungsbolzens in dessen Längsrichtung über ihren gesamten Schwenkbereich formschlüssig gehalten. Auf den Achsbolzen wirkende Axialkräfte können zuverlässig von der Riegelplatte aufgenommen werden, ohne daß ein Aufspreizen bzw. Aufbiegen der Riegelplatte zu befürchten ist.

Es ist vorteilhaft eine auf die Riegelplatte wirkende Rasteinrichtung vorgesehen, die insbesondere eine auf einen Stellhebel der Riegelplatte wirkende Rastfeder umfaßt. Mit konstruktiv einfachen Mitteln ist dem Benutzer das Auffinden einer verriegelnden bzw. freigebenden Schwenkposition der Riegelplatte erleichtert. Ein unbeabsichtigtes, selbsttätiges Entriegeln im Betrieb ist vermieden.

In einer vorteilhaften Ausführung ist das höhenverstellbare Rad schwenkfest mit dem Achsbolzen verbunden und gemeinsam mit diesem schwenkbar in einem Schwenklager des Rahmens gehalten, wobei die Riegelvertiefungen als Umfangsnuten des Achsbolzens ausgebildet sind. Die Umfangsnuten erlauben einen Eingriff der Riegelplatte in beliebiger Schwenkposition des Rades und geben auch eine Schwenkbewegung des Rades bei verriegelter Höheneinstellung frei.

In zweckmäßiger Weiterbildung ist die Feststelleinrichtung für die Schwenkbewegung des Achsbolzens durch die Riegelplatte gebildet, wobei ein Riegelzahn der Riegelplatte zum Eingriff in eine Längsnut des Achsbolzens vorgesehen ist. In einer entsprechenden dafür vorgesehenen Schwenkposition der Riegelplatte greift ihr Riegelzahn in die Längsnut ein und stellt den Achsbolzen mit dem schwenkfest verbundenen Rad in einer gewünschten Lenkposition, beispielsweise in einer Position zum Geradeausfahren fest. Die Längsnut erlaubt einen Eingriff des Riegelzahnes in jeder beliebigen eingestellten Höhenposition. Es entsteht ein formschlüssiger, hochbelastbarer und gegen unbeabsichtigte Verstellung gesicherter Geradeauslauf, der das Bearbeiten größerer Grünflächen erleichtert. Beispielsweise bei Mäharbeiten am Hang ist ein leichteres Schieben des Mähers ermöglicht.

Vorteilhaft ist ein erster Kantenabschnitt der Riegelöffnung im wesentlichen glatt ausgebildet und ein in der Schwenkrichtung der Riegelplatte gegenüberliegender zweiter Kantenabschnitt mit dem Riegelzahn versehen. Es ergeben sich zur freien Wahl des Benutzers drei Einstellmöglichkeiten: In einer ersten, mittigen Schwenkposition der Riegelplatte ist der Achsbolzen vollständig freigegeben und in seiner Höhe einstellbar. In einer zweiten Schwenkposition greift der glatt ausgebildete Kantenabschnitt der Riegelöffnung in die Umfangsnut des Achsbolzens. Hierbei ist die Höhenverstellung verriegelt, während eine Lenkbarkeit bzw. freie Verschwenkbarkeit des betreffenden Rades durch die glatte Ausführung des Kantenabschnittes gegeben ist. Schließlich kann eine dritte, gegenüberliegende Schwenkposition der Riegelplatte gewählt werden, bei der sowohl der entsprechende Kantenabschnitt in die Umfangsnut als auch der Riegelzahn in die Längsnut eingreift. Die gewählte Höhenposition ist dabei verriegelt und gleichzeitig das Rad in der entsprechenden Lenkposition festgestellt. Eine stufenweise Fixierung bzw. Freigabe der Radaufhängung ist mit der vorgeschlagenen Ausführung in kompakter und einfacher Bauweise erreichbar.

Es ist vorteilhaft eine auf den Achsbolzen wirkende Höhenrastung vorgesehen, wobei die Höhenrastung insbesondere eine mittels einer Druckfeder vorgespannte Kugel umfaßt, die zum Eingriff in Rastvertiefungen des Achsbolzens vorgesehen ist. Die entsprechenden Rastvertiefungen sind zweckmäßig durch die Riegelvertiefungen und insbesondere die Umfangsnuten des Achsbolzens gebildet. Im entriegelten Zustand erleichtert die Höhenrastung das Auffinden derjenigen Höhenpositionen, die durch die Riegelvertiefungen bzw. die Umfangsnuten des Achsbolzens vorgegeben sind. Eine Höhenverstellung kann ohne weiteres einhändig erfolgen, indem zunächst von Hand die gewünschte Höhe rastend eingestellt wird. Beim Umgreifen zur Betätigung der Riegeleinrichtung hält die Höhenrastung die Baueinheit aus Achsbolzen und dem daran befestigten Rad provisorisch fest. Ein Verrutschen ist vermieden, wodurch die Betätigung der Verriegelung vereinfacht ist.

In vorteilhafter Weiterbildung umfaßt die Verriegelungseinrichtung ein betätigbares Sicherungselement für die Höhenverstellung des Achsbolzens, welches selbsttätig von einer Freigabeposition in eine die Höhenverstellung unterbindende Verriegelungsposition zurückgeführt wird. Der Benutzer ist dadurch gezwungen, das Sicherungselement bei einer Höhenverstellung des Achsbolzens aktiv in der Freigabeposition zu halten. Eine versehentliche Höhenverstellung ist vermieden. Die Höhenverstellung ist fixiert. Ein selbständiges Absinken des Achsbolzens, also ein ungewolltes selbständiges Verstellen nach unten im unbelasteten Zustand oder auch ein Durchrutschen nach oben unter Belastung wird verhindert bzw. in Verbindung mit unten genannten Vertiefungen bis zur nächsten Vertiefung begrenzt. Das Sicherungselement ist zweckmäßig zusätzlich zum vorgenannten Riegelelement und/oder zur vorgenannten Höhenrastung vorgesehen.

Das Sicherungselement kann klemmend kraftschlüssig oder dgl. ausgeführt sein und ist bevorzugt zum formschlüssigen Eingriff in eine Vertiefung, insbesondere in die Umfangsnut des Achsbolzens vorgesehen. In Verriegelungsposition ist eine hohe Tragfähigkeit sichergestellt, die ein Durchrutschen auch bei hoher Axialbelastung verhindert. In Verbindung mit einem Eingriff in die Umfangsnut ist eine für den Anwender leicht zu handhabende rastende Höhenvertellung gegeben. Bei nicht eingerastetem Sicherungselement ist eine unbeabsichtigte Höhenverstellung auf einen nur kurzen Verstellweg begrenzt, bis das Sicherungselement in die nächstliegende Vertiefung einschnappt.

In einer zweckmäßigen Ausführung ist das Sicherungselement als schwenkbarer, mittels einer Feder in die Verriegelungsposition vorgespannter Sicherungshebel ausgebildet. Die genannte Ausführung ist einfach im Aufbau und wirkungsvoll in ihrer Sicherungsfunktion. Bei hoher Tragfähigkeit treten geringe Betätigungskräfte auf. Durch die Vorspannkraft der Feder und das dadurch erzeugte horizontale Drehmoment auf das Sicherungselement wird in der Höhenverstellposition der Riegelplatte eine unbeabsichtigte Höhenverstellung und insbesondere ein gewichtskraftbedingtes Herausfallen oder Hereinrutschen des Achsbolzens verhindert bzw. begrenzt. Die Feder drückt den Sicherungshebel mit ihrer Vorspannkraft aus einer nicht eingerasteten Position selbsttätig in die nächstliegende Vertiefung.

Ein Ausführungsbeispiel der Erfindung ist im folgenden anhand der Zeichnung näher beschrieben. Es zeigen:
- Fig. 1: in einer perspektivischen Übersichtsdarstellung ein fahrbares Arbeitsgerät am Beispiel eines dreirädrigen Rasenmähers mit einem höhenverstellbaren Frontrad;
- Fig. 2: in einer Explosionsdarstellung die wesentlichen Einzelteile der höhenverstellbaren Frontradaufhängung des Rasenmähers nach Fig. 1;
- Fig. 3: in einer teilweise geschnittenen Darstellung die montierte Anordnung nach Fig. 2 mit einem in Schwenk- und Höhenrichtung entriegelten Achsbolzen;
- Fig. 4: die Anordnung nach Fig. 3 im bezogen auf die Höhenrichtung verriegelten Zustand;
- Fig. 5: aus einem weiteren perspektivischen Blickwinkel die Anordnung nach den Fig. 3 und 4 mit in Höhenund Schwenkrichtung verriegeltem Achsbolzen;
- Fig. 6: in einer teilweise geschnittenen Draufsicht die Anordnung nach Fig. 5 mit Einzelheiten zum Eingriff des Riegelzahnes in die Längsnut des Achsbolzens;
- Fig. 7: eine weitere perspektivische, teilweise geschnittene Darstellung der Anordnung nach den Fig. 3 bis 6 mit Einzelheiten zur rastenden Führung der Riegelplatte;
- Fig. 8: in einer perspektivischen Unteransicht den Bereich des Kopfstückes mit einem optional angebrachten, schwenkbar gelagerten Sicherungshebel im verriegelten Zustand;
- Fig. 9: die Anordnung nach Fig. 8 mit entriegeltem Sicherungshebel.

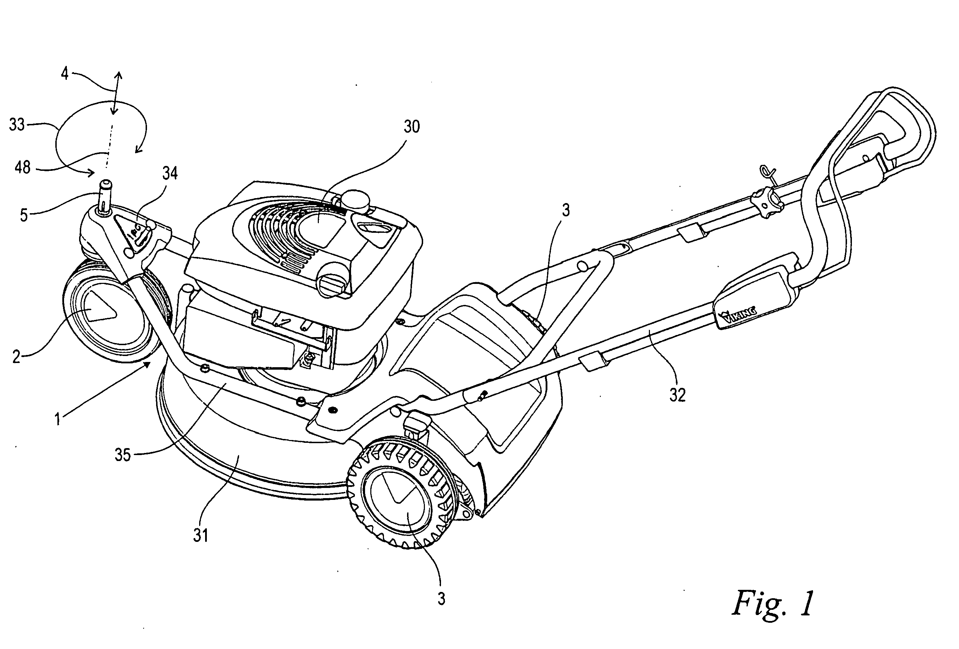

Fig. 1 zeigt in einer perspektivischen Übersichtsdarstellung ein fahrbares Arbeitsgerät am Beispiel eines dreirädrigen Rasenmähers. Es kann auch ein Mulchgerät, ein Vertikutierer oder ein anderes vergleichbares fahrbares Arbeitsgerät vorgesehen sein. Der Rasenmäher weist einen Rahmen 1 auf, der im gezeigten Ausführungsbeispiel aus Rahmenrohren 35 gebildet ist. Mit dem Rahmen 1 ist ein Mähwerk 31 sowie ein Antriebsmotor 30 für das Mähwerk 31 fest verbunden. Am Rahmen 1 sind des weiteren zwei hintere Räder 3 sowie ein vorderes Rad 2 befestigt, mittels derer der Rasenmäher über die zu bearbeitende Grünfläche fahrbar ist. Die Räder 2, 3 können freilaufend oder motorisch angetrieben ausgeführt sein. Zum Schieben bzw. Führen des Rasenmähers ist am Rahmen 1 ein Handgriff 32 befestigt.

Das vordere Rad 2 ist mit einem bezogen auf die gewöhnliche Arbeitsposition des Rasenmähers im wesentlichen vertikal ausgerichteten Achsbolzen 5 verbunden. Die Baugruppe aus dem vorderen Rad und dem Achsbolzen 5 ist in einem Kopfstück 34 des Rahmens 1 um eine Schwenkachse 48 schwenkbar gelagert. Bei freigegebener Verschwenkbarkeit des Achsbolzens 5 ist das vordere Rad entsprechend dem Doppelpfeil 33 frei um 360° um die Schwenkachse 48 verschwenkbar. Es können auch Schwenkanschläge zur Einschränkung der Schwenkbewegung vorgesehen sein. Des weiteren ist die Baueinheit aus dem vorderen Rad 2 und dem Achsbolzen 5 in einer durch die Längsachse des Achsbolzens 5 vorgegebenen und durch einen Doppelpfeil 4 angedeuteten Achsrichtung höhenverstellbar. Durch eine Höhenverstellung des Achsbolzens 5 zusammen mit dem vorderen Rad 2 relativ zum Kopfstück 34 bzw. zum Rahmen 1 ist der vertikale Abstand des Mähwerkes 31 zum Boden einstellbar, wodurch die gewünschte Schnitthöhe einstellbar ist. Anstelle der gezeigten Ausführung mit nur einem höhenverstellbaren Rad 2 können auch zwei oder mehr höhenverstellbare Räder 2 sowie eine Ausführung ohne Schwenklagerung vorteilhaft sein.

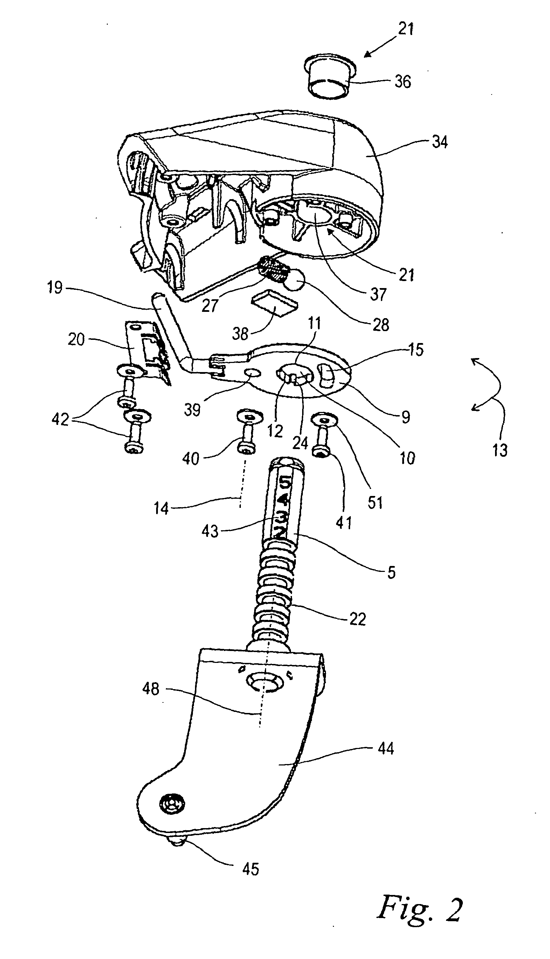

Fig. 2 zeigt in einer Explosionsdarstellung die wesentlichen Einzelteile der vorderen Radaufhängung nach Fig. 1. Demnach ist der vertikale Achsbolzen 5 mit einem Radhalter 44 und einem daran befestigten Achszapfen 45 zur Lagerung des höhenverstellbaren Rades 2 (Fig. 1) schwenkfest verbunden. Der Achszapfen 45 weist gegenüber der Schwenkachse 48 einen Nachlauf auf, der zu einer selbstausrichtenden Schwenkbewegung des Rades 2 (Fig. 1) in die gewünschte Fahrrichtung des Rasenmähers führt. Das Kopfstück 34 weist innenseitig eine Lageröffnung 37 sowie eine von oben eingesetzte Lagerhülse 36 auf, die zusammen ein Schwenklager 21 für den Achsbolzen 5 bilden.

Es ist eine Riegelplatte 9 vorgesehen, die eine Bohrung 39 aufweist. Zur Befestigung der Riegelplatte 9 am Kopfstück 34 ist eine Schraube 40 vorgesehen, die durch die Bohrung 39 hindurchgesteckt und mit dem Kopfstück 34 verschraubt wird. Die Schraube 40 bildet dabei eine Schwenkachse für die Riegelplatte 9, um die diese mittels eines daran befestigten Stellhebels 19 relativ zum Kopfstück 34 in einer durch einen Doppelpfeil 13 angedeuteten Schwenkrichtung verschwenkbar ist.

In einem radialen Abstand zur Schwenkachse 14 bzw. zur Bohrung 39 weist die Riegelplatte 9 eine geschlossene Riegelöffnung 10 mit bezogen auf die Schwenkrichtung 13 sich gegenüberliegenden Kantenabschnitten 11, 12 auf. Der Kantenabschnitt 11 ist im wesentlichen mit einer glatten Kontur versehen, während der Kantenabschnitt 12 einen radial nach innen in die Riegelöffnung 10 weisenden Riegelzahn 24 trägt.

Bezogen auf die Riegelöffnung 10 ist der Bohrung 39 gegenüberliegend eine Bogennut 15 in die Riegelplatte 9 eingearbeitet, deren Krümmungsradius vom Abstand zur Bohrung 39 bzw. zur Schwenkachse 14 vorgegeben ist. Eine Schraube 41 durchgreift im montierten Zustand die Bogennut 15 mit Spiel und ist in das Kopfstück 34 eingedreht. Zwei weitere Schrauben 42 sind zur Befestigung einer Rastfeder 20 am Kopfstück 34 vorgesehen. Die Schrauben 40, 41, 42 tragen jeweils Unterlegscheiben 51.

Eine Kugel 28 ist mittels einer Druckfeder 27 radial nach innen in die Lageröffnung 37 vorgespannt und mittels einer Halteplatte 38 am Kopfstück 34 befestigt. Der Achsbolzen 5 ist mit einer Anzahl von Umfangsnuten 22 sowie zugeordneten Höhenmarkierungen 43 versehen. Im montierten Zustand ist der Achsbolzen 5 durch die Riegelöffnung 10 der Riegelplatte 10 und das Schwenklager 21 des Kopfstückes 34 hindurchgeführt. Dabei sind die Kugel 28 sowie die Kantenabschnitte 11, 12 der Riegelplatte 9 zum bedarfsweisen Eingriff in eine ausgewählte Umfangsnut 22 vorgesehen.

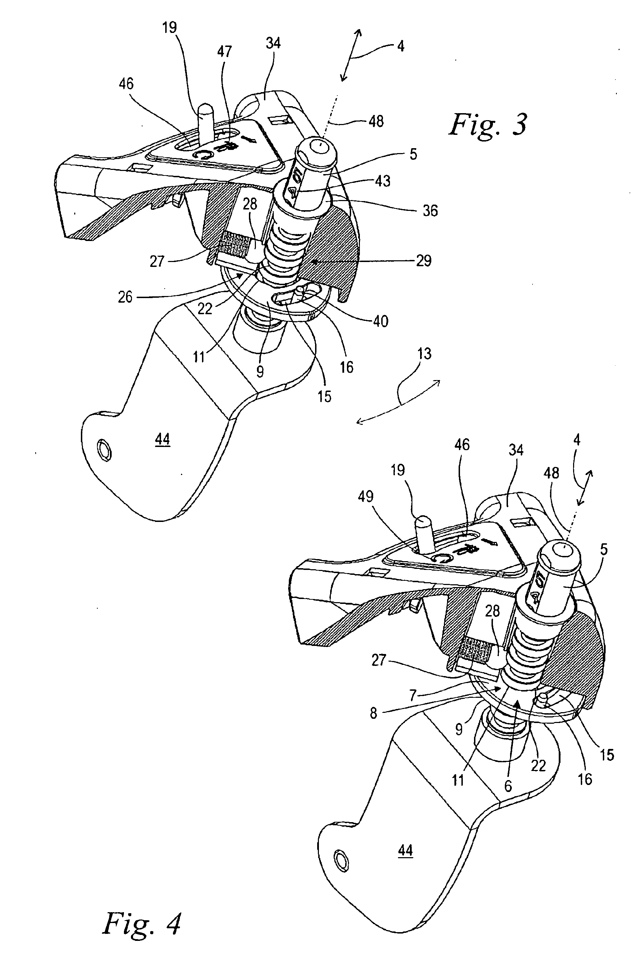

Die Funktionsweise der Baugruppe nach Fig. 2 ist nachfolgend im Zusammenhang mit den Fig. 3 bis 7 näher erläutert. Fig. 3 zeigt in einer perspektivischen, teilweise geschnittenen Darstellung die Anordnung nach Fig. 2 im montierten Zustand. Der Stellhebel 19 der Riegelplatte 9 durchgreift einen bogenförmigen Schlitz 46 des Kopfstückes 34 in einer Mittenposition in Überdeckung zu einer Mittenmarkierung 47. Dementsprechend liegt die mit dem Stellhebel 19 verbundene Riegelplatte 9 bezogen auf ihre Schwenkrichtung 13 in einer mittleren Position, bei der weder der Kantenabschnitt 11 noch der gegenüberliegende Kantenabschnitt 12 (Fig. 2) in eine der Umfangsnuten 22 des Achsbolzens 5 eingreift. Die Schraube 40 durchgreift dabei die Bogennut 15 in einer mittleren Position und wirkt als Führungsbolzen 16 für die Riegelplatte 9.

In der gezeigten Schwenkposition des Stellhebels 19 und der Riegelplatte 9 ist die Baueinheit aus dem Achsbolzen 5 und dem Radhalter 44 um die Schwenkachse 48 verschwenkbar und in der Achsrichtung 4 relativ zum rahmenseitigen Kopfstück 34 höhenverstellbar. Die Kugel 28 ist mittels der Druckfeder 27 unter Vorspannung gegen eine Gehäusewand des Kopfstückes 34 abgestützt und in eine der Umfangsnuten 22 hineingedrückt. Die Umfangsnuten 22 wirken als Rastvertiefungen 29 für die eingreifende Kugel 28. Die Rastvertiefungen 29 bilden zusammen mit der Kugel 28 und der Druckfeder 27 eine Höhenrastung 26 für die Baueinheit aus dem Achsbolzen 5 und dem Radhalter 44 und damit auch für das daran gelagerte höhenverstellbare Rad 2 (Fig. 1). Zur Höhenverstellung kann der Achsbolzen 5 von Hand oder mit dem Fuß in der Achsrichtung 4 verstellt werden, wobei durch die Lage der Umfangsnuten 22 bzw. der Rastvertiefungen 29 relativ zur Kugel 28 Raststufen vorgegeben sind. Jeder Raststufe sind Höhenmarkierungen 43 auf dem Achsbolzen 5 zum visuellen Erkennen der eingestellten Höhenposition zugeordnet. Während der rastenden Höhenverstellung rollt die Kugel 28 auf der Oberfläche des Achsbolzens 5 ab und schnappt in die nächstgelegene Umfangsnut 22 ein. Zur Erleichterung des Rastvorganges können die Umfangsnuten 22 bzw. die Rastvertiefungen 29 mit entsprechenden Schrägflächen versehen sein. Es kann auch zweckmäßig sein, anstelle der Umfangsnuten 22 separate Rastvertiefungen 29 vorzusehen.

Fig. 4 zeigt die Anordnung nach Fig. 3, bei der der Stellhebel 19 an ein seitliches Ende des Schlitzes 46 in Überdeckung mit einer Markierung 49 verschwenkt ist. Dementsprechend ist auch die Riegelplatte 9 so weit verschwenkt, daß der Führungsbolzen 16 am Ende der Bogennut 15 anliegt. Der Kantenabschnitt 11 der Riegelöffnung 10 (Fig. 2) greift formschlüssig in eine der Umfangsnuten 22 ein. Die Riegelplatte 9 bildet dabei zusammen mit der entsprechenden Umfangsnut 22 eine Verriegelungseinrichtung 6 zur formschlüssigen Höhenverriegelung des Achsbolzens 5. Die Umfangsnuten 22 wirken als Riegelvertiefungen 8 der Verriegelungseinrichtung 6, die den Achsbolzen 5 in der Achsrichtung 4 fest verriegeln.

Die in Fig. 2 näher gezeigte glatte Ausführung des eingreifenden Kantenabschnittes 11 erlaubt zusammen mit der Ausführung der Riegelvertiefung 8 als Umfangsnut 22 eine freie Verschwenkbarkeit der Baueinheit aus Achsbolzen 5 und Radhalter 44 um die Schwenkachse 48. Der glatte Kantenabschnitt 11 gleitet bei einer Schwenkbewegung in der entsprechenden Umfangsnut 22, während die Kugel 28 ebenfalls in einer zugeordneten Umfangsnutz 22 gleitet bzw. abrollt. Für eine nicht oder nur eingeschränkt schwenkbare Ausführung kann auch eine andere Form der Riegelvertiefungen 8 beispielsweise in Form von Bohrungen, Schlitzen oder dgl. zweckmäßig sein. Anstelle des im wesentlichen zylindrisch ausgeführten Achsbolzens 5 kann dabei auch ein solcher beispielsweise mit rechteckigem Querschnitt eingesetzt werden. Im gezeigten Ausführungsbeispiel greifen die Kugel 28 und der Kantenabschnitt 11 in zwei bezogen auf die Achsrichtung 4 benachbarte Umfangsnuten 22. Es kann auch zweckmäßig sein, einen abweichenden Abstand zu wählen. Ebenso kann es vorteilhaft sein, daß die Kugel 28 in die gleiche Riegelvertiefung 8 wie die Riegelplatte 9 eingreift, wobei die Kugel 28 mit der Druckfeder 27 in der Riegelplatte 9 gehalten sein kann.

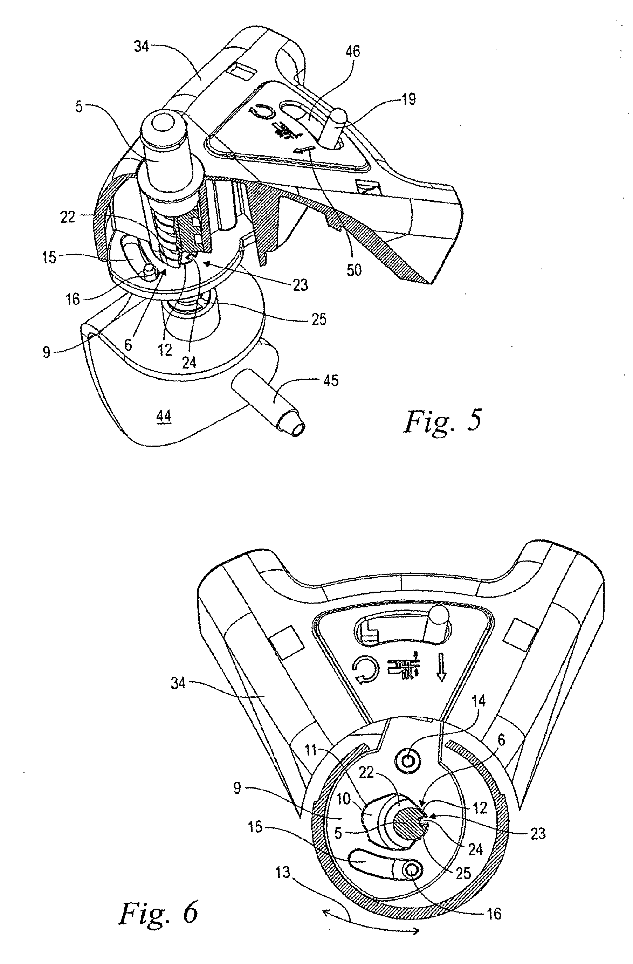

Fig. 5 zeigt in einer weiteren teilweise geschnittenen perspektivischen Ansicht die Anordnung nach den Fig. 3 und 4, bei der die Baueinheit aus dem Stellhebel 19 und der Riegelplatte 9 bezogen auf die Position nach Fig. 4 in die gegenüberliegende Schwenkrichtung verschwenkt ist. Auch hier liegt der Führungsbolzen 16 an einem der beiden Enden der Bogennut 15 an. Der dem Kantenabschnitt 11 (Fig. 4) gegenüberliegende Kantenabschnitt 12 greift in eine der ausgewählten Umfangsnuten 22 als Verriegelungseinrichtung 6 ein. In dieser Schwenkposition der Riegelplatte 9 ist ebenso wie in ihrer Schwenkposition nach Fig. 4 eine Höhenverriegelung des Achsbolzens 5 zusammen mit dem Radhalter 4 und dem auf dem Achszapfen 45 zu lagernden Rad 2 (Fig. 1) gegeben.

Der Achszapfen 45 ist bezogen auf das Kopfstück 34 derart ausgerichtet, daß der Rasenmäher nach Fig. 1 auf Geradeauslauf eingestellt ist. Der Achsbolzen 5 weist zusätzlich zu der Anzahl von Umfangnuten 22 eine durchgehende Längsnut 25 auf, in die bei der gezeigten Geradeausstellung der Riegelzahn 24 der Riegelplatte 9 eingreift. Die Verschwenkbarkeit des Achsbolzens 5 und des damit schwenkfest verbundenen und auf Geradeauslauf eingestellten Rades 2 (Fig. 1) ist unterbunden. Dementsprechend ist der Stellung des Stellhebels 19 eine Markierung 50 auf dem Kopfstück 34 zugeordnet. Die Längsnut 25 und der Riegelzahn 24 bilden eine Feststelleinrichtung 23 zur Feststellung des Achsbolzens 5 in Schwenkrichtung. Es können auch andere Feststelleinrichtungen 23 zweckmäßig sein, bei denen beispielsweise separate Bohrungen zur Aufnahme des Riegelzahnes 24 vorgesehen sind.

Fig. 6 zeigt die Anordnung nach Fig. 5 in einer teilweise geschnittenen Draufsicht mit weiteren Einzelheiten zur kombinierten Verriegelungseinrichtung 6 und Feststelleinrichtung 23. Es ist deutlich zu erkennen, daß der Führungsbolzen 16 gemeinsam mit der Bogennut 15 einen Endanschlag für die Schwenkbewegung der Riegelplatte 9 in der Schwenkrichtung 13 um die Schwenkachse 14 bildet. Der erste in der Schwenkrichtung 13 liegende Kantenabschnitt 11 der Riegelöffnung 10 weist eine insoweit glatte Kontur auf, als daß er beim Eingriff in die Umfangsnut 22 nach Fig. 4 in keinerlei Wechselwirkung zur Längsnut 25 stehen kann und eine freie Verschwenkbarkeit freigibt. Bei der hier gezeigten Schwenkposition der Riegelplatte 9 greift der in der Schwenkrichtung 13 gegenüberliegende Kantenabschnitt 12 in die Umfangsnut 22 ein, wodurch eine Verriegelungseinrichtung 6 für die Höhenverstellung gegeben ist. Gleichzeitig greift der radial nach innen in die Riegelöffnung 10 aus dem Kantenabschnitt 12 hervorstehende Riegelzahn 24 in die Längsnut 25 ein, wodurch eine Feststelleinrichtung 23 zur Feststellung der Verschwenkbarkeit des Achsbolzens 5 gebildet ist. Im gezeigten Ausführungsbeispiel weisen der Riegelzahn 24 und die Längsnut 25 eine im wesentlichen rechteckige Kontur auf. Es können auch schräge oder gerundete Konturabschnitte zur Erleichterung der Einfädelung vorgesehen sein.

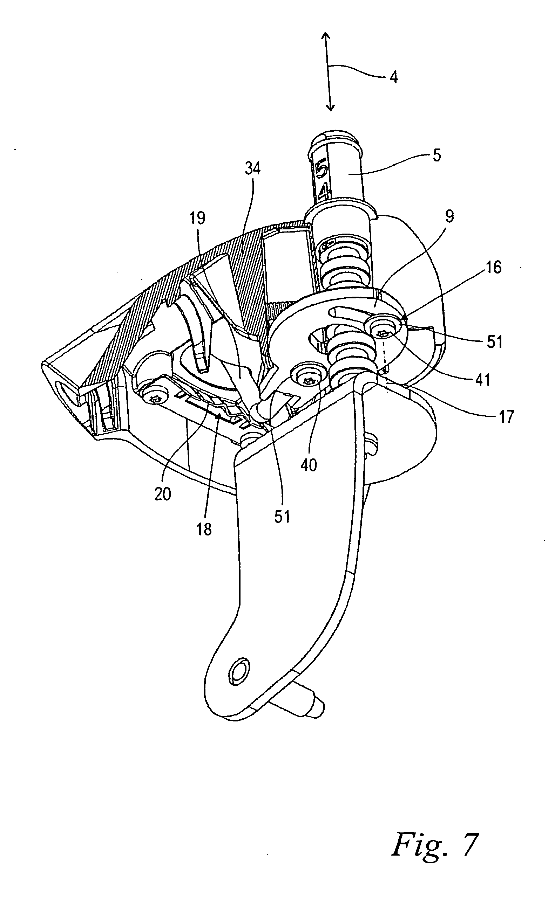

Fig. 7 zeigt eine weitere teilweise geschnittene Darstellung der Anordnung nach den Fig. 3 bis 6 von schräg unten. Demnach ist zu erkennen, daß die Rastfeder 20 als mehrfach gewölbte Blattfeder ausgeführt ist und am Stellhebel 19 anliegt. Die Rastfeder 20 bildet zusammen mit dem Stellhebel 19 eine Rasteinrichtung 18 für die Riegelplatte 9, wobei die Wölbungen der Rastfeder 20 drei verschiedene, gerastete Schwenkpositionen der Riegelplatte 9 entsprechend den Schwenkpositionen nach den Fig. 3 bis 6 vorgeben. Es kann auch eine andere Bauform der Rasteinrichtung 18 vorteilhaft sein, bei der die Rastfeder 20 beispielsweise direkt an der Riegelplatte 9 angreift.

Zusätzlich ist die Riegelplatte 9 noch mittels des Führungsbolzens 16 in dessen Längsrichtung 17 formschlüssig gehalten. Die Schraube 41, die den Führungsbolzen 16 bildet, liegt dazu mit ihrem Kopf und der zwischengelegten Unterlegscheibe 21 gleitend auf der Oberfläche der Riegelplatte 9 auf. Die Riegelplatte 9 ist dementsprechend in der Längsrichtung 17 nach unten gegen die Unterlegscheibe 51 und in Gegenrichtung gegen das Gehäuse des Kopfstückes 34 formschlüssig abgestützt. Eine Belastung des Achsbolzens 5 in der Achsrichtung 4 kann entsprechend durch die Riegelplatte 9 mit hoher Haltekraft aufgefangen werden.

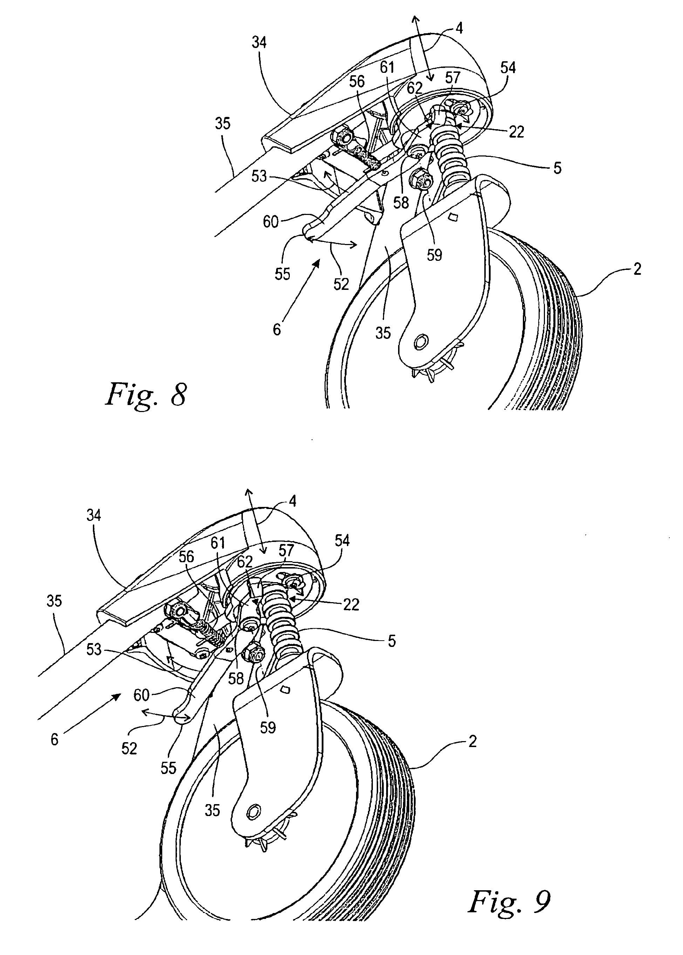

Fig. 8 zeigt in perspektivischer Unteransicht den Bereich des Kopfstückes 34, in dem das Rad 2 in der Achsrichtung 4 höhenverstellbar und um die Achsrichtung 4 schwenkbar gelagert ist.

Die Verriegelungseinrichtung 6 umfaßt zusätzlich zu dem im Zusammenhang mit den Fig. 1 bis 7 beschriebenen Riegelelement 7 und der Höhenrastung 26 ein Sicherungselement 55 für die Höhenverstellung des Achsbolzens 5 in der Achsrichtung 4. Es kann auch zweckmäßig sein, das Sicherungselement 55 alternativ zum vorgenannten Riegelelement 7 und/oder zur Höhenrastung 26 vorzusehen. Das Sicherungselement 55 ist beispielhaft als Sicherungshebel gezeigt, der um eine durch eine Schraube 58 gebildete Schwenkachse 59 seitens des Benutzers schwenkend betätigbar ist.

Das Sicherungselement 55 umfaßt einen Hebelgriff 60, der zwischen den an das Kopfstück 34 angrenzenden Rahmenrohren 35 unter dem Kopfstück 34 in Richtung des Motors 30 (Fig. 1) hervorragt. Bezogen auf die Schwenkachse 59 dem Hebelgriff 60 gegenüberliegend ist einteilig daran angeformt ein Hebelabschnitt 61 mit einer dem Achsbolzen 5 zugewandten Sicherungskante 62 und einer radial außen liegenden Hebelnase 57 vorgesehen. Die Sicherungskante 62 greift radial von außen nach innen in eine der Umfangsnuten 22 ein. Es können auch separate Vertiefungen am Achsbolzen 5 für den Eingriff des Hebelabschnittes 61 mit der Sicherungskante 62 vorgesehen sein. Die radial außenseitig überstehende Hebelnase 57 ist in der Achsrichtung 4 nach oben gegen das Kopfstück 34 abgestützt. Bei Belastung in vertikaler Richtung ist die Entstehung eines Kippmomentes am Sicherungselement 50 und ein ggf. daraus resultierendes Herausrutschen der Sicherungskante 62 verhindert.

Das als Sicherungshebel ausgebildete Sicherungselement 55 ist entsprechend einem Doppelpfeil 52 manuell zwischen einer hier gezeigten Verriegelungsposition und einer Freigabeposition verschwenkend betätigbar. In der hier gezeigten Verriegelungsposition greift der Hebelabschnitt 61 mit der Sicherungskante 62 formschlüssig in eine höhenabhängig gewählte Umfangsnut 22 ein und verhindert eine unbeabsichtigte Höhenverstellung des Achsbolzens 5. Nahe der Schwenkachse 59 greift eine beispielhaft als Schraubenzugfeder ausgebildete Feder 56 an, die an ihrem gegenüberliegenden Ende am Kopfstück 34 befestigt ist. Mittels der Feder 56 ist der Hebelgriff 60 in Richtung eines Pfeiles 53 vorgespannt, wodurch die Sicherungskante 62 selbsttätig in die Umfangsnut 22 in Richtung des Pfeiles 54 eingedrückt wird. Das Sicherungselement 55 ist mittels der Feder 56 in die hier gezeigte Verriegelungsposition vorgespannt.

Fig. 9 zeigt die Anordnung nach Fig. 8 mit dem Sicherungselement 55 in Freigabeposition. Unter Bezug auf Fig. 8 sind hier in Fig. 9 gleiche Merkmale mit gleichen Bezugszeichen versehen.

In der hier gezeigten Freigabeposition ist der Hebelabschnitt 61 entgegen dem Pfeil 54 um die Schwenkachse 59 aus der Umfangsnut 22 herausgeschwenkt, wodurch eine Höhenverstellung des Achsbolzens 5 zusammen mit dem Rad 2 in der Achsrichtung 4 freigegeben ist. Der Darstellung nach Fig. 9 ist zu entnehmen, daß die Sicherungskante 62 beispielhaft in Form eines konvex gekrümmten Kreisabschnittes verläuft, woraus sich ein flächig verteilter Eingriff in die jeweilige Umfangsnut 22 bei der Verriegelungsposition nach Fig. 8 ergibt. Es kann aber auch ein geradliniger oder anders geformter Verlauf der Sicherungskante 62 zweckmäßig sein. Zur Herausschwenkung der Sicherungskante 62 des Hebelabschnitts 61 aus der Umfangsnut 22 ist der Hebelgriff 60 manuell entgegen dem Pfeil 53 und entgegen der Vorspannkraft der Feder 56 aus der in Fig. 8 gezeigten Verriegelungsposition heraus in die hier gezeigte Freigabeposition verschwenkt. Sofern die Riegelplatte 9 entsprechend der Darstellung nach Fig. 3 in Freigabeposition ist, der Hebelgriff 60 jedoch nicht betätigt wird, hält die Feder 56 die Sicherungskante 62 in der Umfangsnut 22. Das Sicherungselement 55 hält zunächst den Achsbolzen 5 in der Achsrichtung 4 fest. Eine Belastung oder Entlastung des Kopfstückes 34 kann nicht dazu führen, daß der Achsbolzen 5 nach oben oder unten durchrutscht. Eine Höhenverstellung des Rades 2 bei der Riegelplatte 9 in Freigabeposition (Fig. 3) setzt seitens des Benutzers ein aktives Betätigen und Festhalten des Hebelgriffs 60 in der in Fig. 9 gezeigten Freigabeposition voraus. Beim Loslassen des Hebelgriffs 60 hält die Feder 56 das Sicherungselement 55 selbsttätig in der in Fig. 8 gezeigten Verriegelungsposition oder führt es aus der Freigabeposition in die Verriegelungsposition zurück. Nach erfolgter Höhenverstellung rastet die Sicherungskante 62 in die vorgesehene Umfangsnut 22 ein, wodurch eine weitere unbeabsichtigte Höhenverstellung verhindert ist. Falls infolge der vorgenommenen Höhenverstellung die Sicherungskante 62 nicht in Überdeckung mit einer der Umfangsnuten 22 liegt, ist ein unbeabsichtigtes Durchrutschen des Achsbolzens 5 nach oben oder unten auf ein geringes Maß begrenzt, bis die Sicherungskante 62 selbsttätig in die nächstliegende Umfangsnut 22 einrastet.

## Patentansprüche

1. Fahrbares Arbeitsgerät, insbesondere Rasenmäher, mit einem Rahmen (1) und mit mehreren am Rahmen (1) befestigten Rädern (2, 3), von denen mindestens ein Rad (2) höhenverstellbar ist, wobei das mindestens eine höhenverstellbare Rad (2) mittels eines zumindest im Wesentlichen vertikal ausgerichteten und in seiner Achsrichtung (4) höhenverstellbaren Achsbolzens (5) am Rahmen (1) gehalten ist, wobei das höhenverstellbare Rad (2) schwenkfest mit dem Achsbolzen (5) verbunden ist und wobei eine auf den Achsbolzen (5) wirkende Verriegelungseinrichtung (6) zur Verriegelung des Achsbolzens (5) in einer gewählten Höhenposition vorgesehen ist,
**dadurch gekennzeichnet, dass** das höhenverstellbare Rad (2) gemeinsam mit dem Achsbolzen (5) im Betrieb bei verriegelter Höhenverstellung schwenkbar und lenkbar in einem Schwenklager (21) des Rahmens (1) gehalten ist, und dass eine Feststelleinrichtung (23) für eine Unterbindung der Schwenkbewegung des Achsbolzens (5) zusammen mit dem Rad (2) bei verriegelter Höhenverstellung vorgesehen ist.

2. Arbeitsgerät nach Anspruch 1,
**dadurch gekennzeichnet, daß** die Verriegelungseinrichtung (6) ein betätigbares Riegelelement (7) zum formschlüssigen Eingriff in Riegelvertiefungen (8) des Achsbolzens umfaßt.

3. Arbeitsgerät nach Anspruch 2,
**dadurch gekennzeichnet, daß** das Riegelelement (7) als quer zur Achsrichtung (4) des Achsbolzens (5) verschwenkbare Riegelplatte (9) ausgebildet ist.

4. Arbeitsgerät nach Anspruch 3,
**dadurch gekennzeichnet, daß** die Riegelplatte (9) den Achsbolzen (5) mittels einer Riegelöffnung (10) umgreift, wobei zumindest ein Kantenabschnitt (11, 12) und insbesondere zwei in einer Schwenkrichtung (13) sich gegenüberliegende Kantenabschnitte (11, 12) der Riegelöffnung (10) zum Eingriff in die Riegelvertiefung (8) des Achsbolzens (5) vorgesehen sind.

5. Arbeitsgerät nach Anspruch 4,
**dadurch gekennzeichnet, daß** die Riegelplatte (9) bezogen auf die Riegelöffnung (10) gegenüberliegend zu ihrer Schwenkachse (14) eine Bogennut (15) aufweist, die von einem rahmenfesten Führungsbolzen (16) durchgriffen ist.

6. Arbeitsgerät nach Anspruch 5,
**dadurch gekennzeichnet, daß** die Riegelplatte (9) mittels des Führungsbolzens (16) in dessen Längsrichtung (17) formschlüssig gehalten ist.

7. Arbeitsgerät nach einem der Ansprüche 3 bis 6,
**dadurch gekennzeichnet, daß** eine auf die Riegelplatte (9) wirkende Rasteinrichtung (18) vorgesehen ist, die insbesondere eine auf einen Stellhebel (19) der Riegelplatte (9) wirkende Rastfeder (20) umfaßt.

8. Arbeitsgerät nach einem der Ansprüche 2 bis 7,
**dadurch gekennzeichnet, daß** die Riegelvertiefungen (8) als Umfangsnuten (22) des Achsbolzens (5) ausgebildet sind.

9. Arbeitsgerät nach einem der Ansprüche 3 bis 8,
**dadurch gekennzeichnet, daß** die Feststelleinrichtung (23) durch die Riegelplatte (9) gebildet ist, wobei ein Riegelzahn (24) der Riegelplatte (9) zum Eingriff in eine Längsnut (25) des Achsbolzens (5) vorgesehen ist.

10. Arbeitsgerät nach Anspruch 9,
**dadurch gekennzeichnet, daß** ein erster Kantenabschnitt (11) der Riegelöffnung (10) im wesentlichen glatt ausgebildet ist und ein in der Schwenkrichtung (13) gegenüber liegender zweiter Kantenabschnitt (12) mit dem Riegelzahn (24) versehen ist.

11. Arbeitsgerät nach einem der Ansprüche 1 bis 10,
**dadurch gekennzeichnet, daß** eine auf den Achsbolzen (5) wirkende Höhenrastung (26) vorgesehen ist.

12. Arbeitsgerät nach Anspruch 11,
**dadurch gekennzeichnet, daß** die Höhenrastung (26) eine mittels einer Druckfeder (27) vorgespannte Kugel (28) umfaßt, die zum Eingriff in Rastvertiefungen (29) des Achsbolzens (5) vorgesehen ist.

13. Arbeitsgerät nach Anspruch 12,
**dadurch gekennzeichnet, daß** die Rastvertiefungen (29) durch die Riegelvertiefungen (8) und insbesondere die Umfangsnuten (22) des Achsbolzens (5) gebildet sind.

14. Arbeitsgerät nach einem der Ansprüche 1 bis 13,
**dadurch gekennzeichnet, daß** die Verriegelungseinrichtung (6) ein betätigbares Sicherungselement (55) für die Höhenverstellung des Achsbolzens (5) umfaßt, welches selbsttätig von einer Freigabeposition in eine die Höhenverstellung unterbindende Verriegelungsposition zurückgeführt wird.

15. Arbeitsgerät nach Anspruch 14,
**dadurch gekennzeichnet, daß** das Sicherungselement (55) zusätzlich zum Riegelelement (7) und/oder zur Höhenrastung (26) vorgesehen ist.

16. Arbeitsgerät nach Anspruch 14 oder 15,
**dadurch gekennzeichnet, daß** das Sicherungselement (55) zum formschlüssigen Eingriff in eine Vertiefung, insbesondere in die Umfangsnut (22) des Achsbolzens (5) vorgesehen ist.

17. Arbeitsgerät nach Anspruch 16,
**dadurch gekennzeichnet, daß** das Sicherungselement (55) als schwenkbarer, mittels einer Feder (56) in die Verriegelungsposition vorgespannter Sicherungshebel ausgebildet ist.

## Claims

1. Mobile working apparatus, in particular lawnmower, with a frame (1) and a plurality of wheels (2, 3) attached to the frame (1), whereof at least one wheel (2) is vertically adjustable, wherein the at least one vertically adjustable wheel (2) is held on the frame (1) by a pivot pin (5) which is at least substantially vertically oriented and vertically adjustable in the direction of its axis (4), wherein the vertically adjustable wheel (2) is non-pivotably joined to the pivot pin (5), and wherein a locking device (6) for locking the pivot pin (5) in a selected vertical position is provided,
**characterised in that** in operation the vertically adjustable wheel (2) together with the pivot pin (5) is pivotably and steerably held in a pivot bearing (21) of the frame (1) in the locked position of the vertical adjustment facility, and **in that** a detent (23) is provided to prevent the pivoting movement of the pivot pin (5) together with the wheel (2) in the locked position of the vertical adjustment facility.

2. Working apparatus according to claim 1,
**characterised in that** the locking device (6) includes a latching element (7) operated for positive engagement with latching recesses (8) of the pivot pin.

3. Working apparatus according to claim 2,
**characterised in that** the latching element (7) is designed as a latch plate (9) pivotable at right angles to the direction of the axis (4) of the pivot pin (5).

4. Working apparatus according to claim 3,
**characterised in that** the latch plate (9) encompasses the pivot pin (5) by means of a latch opening (10), wherein at least one edge section (11, 12) and in particular two edge sections (11, 12) of the latch opening (10) located opposite one another in a pivoting direction (13) is/are provided for engagement with the latching recess (8) of the pivot pin (5).

5. Working apparatus according to claim 4,
**characterised in that**, relative to the latch opening (10), the latch plate (9) has a curved groove (15) opposite its pivoting axis (14), through which a guide pin (16) located on the frame passes.

6. Working apparatus according to claim 5,
**characterised in that** the latch plate (9) is positively held by means of the guide pin (16) in the longitudinal direction (17) of the latter.

7. Working apparatus according to any of claims 3 to 6,
**characterised in that** a detent mechanism (18) acting on the latch plate (9) is provided, which in particular comprises a detent spring (20) acting on an actuating lever (19) of the latch plate (9).

8. Working apparatus according to any of claims 2 to 7,
**characterised in that** the latching recesses (8) are designed as circumferential grooves (22) of the pivot pin (5).

9. Working apparatus according to any of claims 3 to 8,
**characterised in that** the detent (23) is represented by the latch plate (9), a latching tooth (24) of the latch plate (9) being provided for engagement with a longitudinal groove (25) of the pivot pin (5).

10. Working apparatus according to claim 9,
**characterised in that** a first edge section (11) of the latch opening (10) is substantially smooth, while a second edge section (12) located opposite in the pivoting direction (13) is provided with the latching tooth (24).

11. Working apparatus according to any of claims 1 to 10,
**characterised in that** a vertical catch (26) acting on the pivot pin (5) is provided.

12. Working apparatus according to claim 11,
**characterised in that** the vertical catch (26) comprises a ball (28) preloaded by a compression spring (27), which is provided for engagement with detent recesses (29).

13. Working apparatus according to claim 12,
**characterised in that** the detent recesses (29) are represented by the latching recesses (8) and in particular by the circumferential grooves (22) of the pivot pin (5).

14. Working apparatus according to any of claims 1 to 13,
**characterised in that** the locking device (6) comprises a controllable securing element (55) for the vertical adjustment of the pivot pin (5), which is automatically returned from a released position to a locked position preventing any vertical adjustment.

15. Working apparatus according to claim 14,
**characterised in that** the securing element (55) is provided in addition to the latching element (7) and/or to the vertical catch (26).

16. Working apparatus according to claim 14 or 15,
**characterised in that** the securing element (55) is designed for engagement with a recess, in particular with the circumferential groove (22) of the pivot pin (5).

17. Working apparatus according to claim 16,
**characterised in that** the securing element (55) is designed as a pivotable securing lever preloaded towards the locked position by means of a spring (56).

## Revendications

1. Appareil de travail mobile, en particulier tondeuse à gazon, comportant un châssis (1) et plusieurs roues (2, 3) fixées conte le châssis (1), parmi lesquelles au moins une roue (2) est réglable en hauteur, ladite au moins une roue (2) réglable en hauteur étant fixée contre le châssis (1) au moyen d'au moins un boulon axial (5), orienté sensiblement verticalement et réglable en hauteur dans son sens axial (4), la roue (2) réglable en hauteur étant assemblée de manière immobile en pivotement avec le boulon axial (5) et un dispositif de verrouillage (6) agissant sur le boulon axial (5) étant prévu pour verrouiller le boulon axial (5) dans une position en hauteur choisie, **caractérisé en ce que** la roue (2) réglable en hauteur, conjointement avec le boulon axial (5), est fixée en cours de service, avec un réglage en hauteur verrouillé, de manière pivotante et dirigeable dans un palier de pivotement (21) du châssis (1), et **en ce qu'**il est prévu un dispositif d'immobilisation (23) pour empêcher le mouvement de pivotement du boulon axial (5) conjointement avec la roue (2) lorsque le réglage en hauteur est verrouillé.

2. Appareil de travail mobile selon la revendication 1, **caractérisé en ce que** le dispositif de verrouillage (6) comporte un élément de verrouillage (7) actionnable pour entrer en prise par emboîtement dans des évidements de verrouillage (8) du boulon axial.

3. Appareil de travail mobile selon la revendication 2, **caractérisé en ce que** l'élément de verrouillage (7) est réalisé sous la forme d'une plaque de verrouillage (9) apte à pivoter transversalement à la direction axiale (4) du boulon axial (5).

4. Appareil de travail mobile selon la revendication 3, **caractérisé en ce que** la plaque de verrouillage (9) entoure le boulon axial (5) au moyen d'une ouverture de verrouillage (10), au moins une partie de bordure (11, 12) et en particulier deux parties de bordure (11, 12) de l'ouverture de verrouillage (10), situées face à face dans une direction de pivotement (13), étant prévues pour entrer en prise dans l'évidement de verrouillage (8) du boulon axial (5).

5. Appareil de travail mobile selon la revendication 4, **caractérisé en ce que** la plaque de verrouillage (9) comporte, en face de son axe de pivotement (14) par rapport à l'ouverture de verrouillage (10), une rainure courbe (15) qui est traversée par un boulon de guidage (16) solidaire du châssis.

6. Appareil de travail mobile selon la revendication 5, **caractérisé en ce que** la plaque de verrouillage (9) est maintenue par emboîtement au moyen du boulon de guidage (16) dans le sens longitudinal (17) de celui-ci.

7. Appareil de travail mobile selon l'une quelconque des revendications 3 à 6, **caractérisé en ce qu'**il est prévu un dispositif de blocage (18), qui agit sur la plaque de verrouillage (9) et qui comporte en particulier un ressort de blocage (20) agissant sur un levier de réglage (19) de la plaque de verrouillage (9).

8. Appareil de travail mobile selon l'une quelconque des revendications 2 à 7, **caractérisé en ce que** les évidements de verrouillage (8) sont réalisés sous la forme de rainures périphériques (22) dans le boulon axial (5).

9. Appareil de travail mobile selon l'une quelconque des revendications 3 à 8, **caractérisé en ce que** le dispositif d'immobilisation (23) est formé par la plaque de verrouillage (9), une dent (24) de la plaque de verrouillage (9) étant prévue pour entrer en prise dans une rainure longitudinale (25) du boulon axial (5).

10. Appareil de travail mobile selon la revendication 9, **caractérisé en ce qu'**une première partie de bordure (11) de l'ouverture de verrouillage (10) est sensiblement lisse et une deuxième partie de bordure (12) située en face dans la direction de pivotement (13) est munie de la dent de verrouillage (24).

11. Appareil de travail mobile selon l'une quelconque des revendications 1 à 10, **caractérisé en ce qu'**il est prévu un système de blocage en hauteur (26) agissant sur le boulon axial (5).

12. Appareil de travail mobile selon la revendication 11, **caractérisé en ce que** le système de blocage en hauteur (26) comporte une bille (28), qui est précontrainte par un ressort de pression (27) et qui est prévue pour entrer en prise dans des évidements de blocage (29) du boulon axial (5).

13. Appareil de travail mobile selon la revendication 12, **caractérisé en ce que** les évidements de blocage (29) sont formés par les évidements de verrouillage (8) et, en particulier, par les rainures périphériques (22) du boulon axial (5).

14. Appareil de travail mobile selon l'une quelconque des revendications 1 à 13, **caractérisé en ce que** le dispositif de verrouillage (6) comporte un élément de sécurité (55) actionnable pour le réglage en hauteur du boulon axial (5), lequel est ramené automatiquement depuis une position de déblocage dans une position de verrouillage empêchant le réglage en hauteur.

15. Appareil de travail mobile selon la revendication 14, **caractérisé en ce que** l'élément de sécurité (55) est prévu en plus de l'élément de verrouillage (7) et/ou du système de blocage en hauteur (26).

16. Appareil de travail mobile selon la revendication 14 ou 15, **caractérisé en ce que** l'élément de sécurité (55) est prévu pour entrer en prise par emboîtement dans un évidement, en particulier dans la rainure périphérique (22) du boulon axial (5).

17. Appareil de travail mobile selon la revendication 16, **caractérisé en ce que** l'élément de sécurité (55) est réalisé sous la forme d'un levier de sécurité pivotant, précontraint dans la position de verrouillage au moyen d'un ressort (56).
